# EUROPÄISCHE PATENTSCHRIFT

(11) **EP 0 755 838 B1**
(45) Veröffentlichungstag und Bekanntmachung des Hinweises auf die Patenterteilung: **26.01.2000**
(21) Anmeldenummer: 96810454.7
(22) Anmeldetag: 12.07.1996
(51) Int. Cl.: B61D 17/04, B62D 27/06, B62D 33/04

(54) **Gerippestruktur mit Türrahmen und Wandelementen**
Skeleton frame with doorframes and wall elements
Ossature avec cadres de porte et éléments de paroi

(30) Priorität: 27.07.1995 CH 219995
(43) Veröffentlichungstag der Anmeldung: 29.01.1997
(73) Patentinhaber: Alusuisse Technology & Management AG, 8212 Neuhausen am Rheinfall (CH)
(72) Erfinder: Utz, Manfred, 8910 Affoltern am Albis (CH)

(56) Entgegenhaltungen:
- EP-A- 0 465 427
- DE-A- 2 751 753
- DE-C- 492 718
- GB-A- 1 604 804

## Beschreibung

Die Erfindung betrifft einen Wagenkasten nach dem Oberbegriff von Anspruch 1. Im Rahmen der Erfindung liegt auch ein Verfahren zu seiner Herstellung.

Bei Gerippestrukturen, wie sie etwa beim Bau von Wagenkasten für Strassen- und Schienenfahrzeuge Anwendung finden, ist es bekannt, Türrahmen und Wandelemente mit den Profilen des Gerippes zu verschrauben oder auf andere bekannte Arten, z.B. durch Nieten oder Schweissen, miteinander zu verbinden. Ein wesentlicher Nachteil der vorbekannten Verbindungsarten liegt darin, dass die Verbindungsstellen von aussen sichtbar sind.

Die DE-A-2 751 753 offenbart einen Wagenkasten der eingangs genannten Art mit winkelförmigen Eckwerbindungsstücken.

Angesichts dieses Standes der Technik hat sich der Erfinder die Aufgabe gestellt, eine Gerippestruktur der eingangs erwähnten Art so auszugestalten, dass Türrahmen und Wandelemente auf einfache Weise lösbar mit der Gerippestruktur verbunden werden können. Bei Gerippestrukturen von Wagenkasten soll zudem die Montage und Demontage der Türrahmen und Wandelemente von der Aussenseite des Wagenkastens her möglich sein, wobei die Verbindungsstellen von aussen nicht sichtbar sein dürfen.

Zur erfindungsgemässen Lösung der Aufgabe führt ein Wagenkasten mit den Merkmalen von Anspruch 1. Das erfindungsgemässe Verbindungsteil erleichtert den Einund Ausbau von vormontierten Türen, inklusive Türrahmen und Türmechanismus, sowie von vormontierten und lackierten Wandelementen. Handelt es sich beispielsweise um Wagenkasten von Strassen- oder Schienenfahrzeugen, so können die vormontierten Teile als ganze Baugruppen von aussen an die Gerippestruktur herangeführt und von der Innenseite her befestigt werden. Die Verbindungsteile sind von aussen nicht sichtbar.

Türrahmen und Wandelemente können mit dem Montagesteg auf einfache Weise zu einer lösbaren Befestigung verschraubt sein. Zu diesem Zweck kann im Türrahmen oder im Wandelement ein Gewinde eingelegt sein, in das ein den Montagesteg durchsetzender Schraubenbolzen eingreift. Eine andere zweckmässige Schraubverbindung umfasst einen Schraubenbolzen, der in das Gewinde eines in einer hinterschnittenen Nut des Türrahmens oder Wandelementes gelagerten Nutensteines eingreift, d.h. Türrahmen und Wandelemente sind bei dieser Ausführungsvariante ihrerseits ebenfalls mit einem C-förmigen Anschluss versehen. In besonders gelagerten Fällen kann es sich auch als zweckmässig erweisen, wenn der Montagesteg selbst eine hinterschnittene Nut zur Aufnahme eines Nutensteins für einen Schraubenbolzen umfasst.

Bei einer bevorzugten Ausführungsform der Erfindung ist der Montagesteg im wesentlichen parallel zu einer Profilwand des Profils der Gerippestruktur, d.h. bei einem Wagenkasten parallel zu dessen Seitenwand, angeordnet.

Türrahmen und Wandelemente können über einzelne diskrete Verbindungsteile mit dem Profil der Gerippestruktur verbunden sein, d.h. die Verbindungsteile erstrecken sich jeweils nur über kleine Teilbereiche des Profils. Bei einer anderen Ausführungsform der Erfindung erstreckt sich das Verbindungsteil als Verbindungsleiste im wesentlichen über die gesamte Länge des Profils.

Türrahmen und Wandelemente können mit der Gerippestruktur zusätzlich verklebt sein. In diesem Fall ist es vorteilhaft, wenn das Verbindungsteil in Anschlagstellung mit dem Türrahmen bzw. Wandelement die Dicke einer Klebefuge definiert.

Ein zweckmässiges Verfahren zur Herstellung des erfindungsgemässen Wagenkastens ergibt sich dadurch, dass die Verbindungsteile an den Profilen der Gerippestruktur vormontiert, die Türrahmen bzw. Wandelemente mit den Montagestegen in Anschlag gebracht und anschliessend von der Innenseite des Wagenkastens her miteinander verschraubt werden.

Die Profile der Gerippestruktur und die Verbindungsteile sind bevorzugt aus einer Aluminiumlegierung gefertigt und werden zweckmässigerweise durch Strangpressen hergestellt. Die Wandelemente können aus einem Composite-Werkstoff, aus einem Verbundmaterial, aus Profilen, aus Blechen oder aus einem anderen für diesen Zweck eingesetzten Werkstoff bestehen. Die Türrahmen sind, wie die Profile der Gerippestruktur, bevorzugt ebenfalls aus stranggepressten Profilen aus einer Aluminiumlegierung gefertigt.

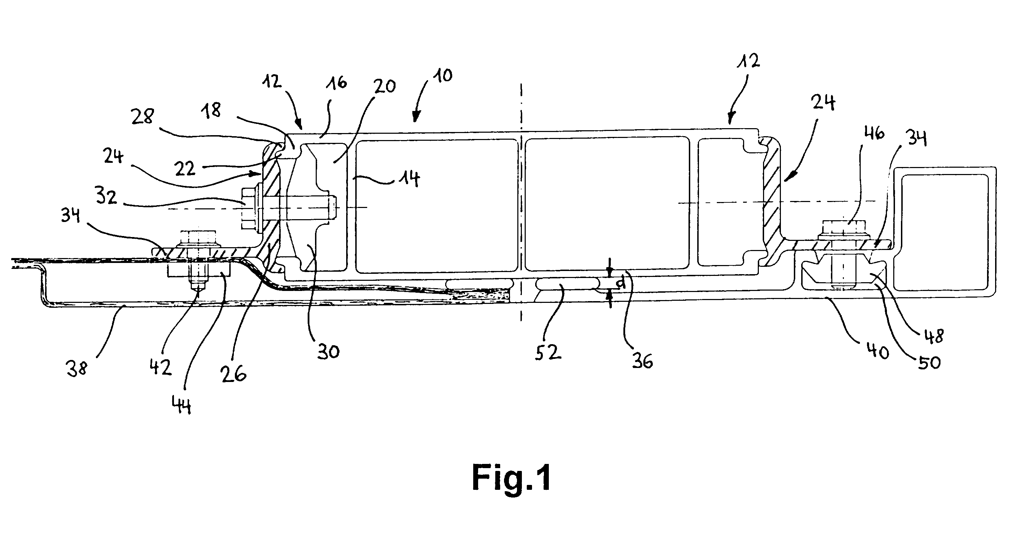

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch ein Profil einer Gerippestruktur mit an diesem befestigten Wandelement und Türrahmen;
- Fig. 2 einen Querschnitt durch eine zweite Ausführungsform eines Verbindungsteils;
- Fig. 3 einen Querschnitt durch eine dritte Ausführungsform eines Verbindungsteils.

Ein querschnittlich symmetrisches Profil 10, beispielsweise ein Pfosten der Gerippestruktur eines in der Zeichnung nicht näher dargestellten Wagenkastens für Schienen- oder Strassenfahrzeuge, weist auf zwei einander entgegengesetzten Seiten einen C-förmigen Anschluss 12 für jeweils ein Verbindungsteil 24 auf. Der C-förmige Anschluss 12 umfasst einen Bodenstreifen 14 mit von diesem aufragenden parallelen Schenkelstreifen 16, von denen nach innen gerichtete und einander gegenüberstehende Stege 18 unter Bildung einer hinterschnittenen Nut 20 abragen. Die freien Enden der Stege 18 sind unter Bildung von Anschlagstreifen 22 für das Verbindungsteil 24 in vom Bodenstreifen 14 wegweisender Richtung abgewinkelt.

Das Verbindungsteil 24 umfasst einen Basisstreifen 26 mit von diesem abgewinkelten Randstreifen 28, welche die Anschlagstreifen 22 des C-förmigen Anschlusses 12 klammerartig und formschlüssig übergreifen. Ein den Basisstreifen 26 durchsetzender Schraubenbolzen 32 greift in das Gewinde eines in der hinterschnittenen Nut 20 gelagerten Nutensteines 30 ein und legt damit das Verbindungsteil 24 kraftschlüssig am C-förmigen Anschlussteil 12 des Profils 10 fest.

Vom Verbindungsteil 24 ragt parallel zur äusseren Profilwand 36 des Profils 10, d.h. bei einem Wagenkasten parallel zu dessen Seitenwand, ein Montagesteg 34 ab. Dieser Montagesteg 34 dient als Anschlag für ein von aussen an die Gerippestruktur herangeführtes Wandelement 38 bzw. einen Türrahmen 40.

Die Befestigung des Wandelementes 38 erfolgt über einen den Montagesteg 34 durchsetzenden Schraubenbolzen 42, der in ein im Wandelement 38 eingelegten Gewinde 44 eingreift.

Die Befestigung des Türrahmens 40 am Montagesteg 34 erfolgt über eine im Türrahmen integrierte hinterschnittene Nut 50, in welchem ein Nutenstein 48 mit einem Gewinde zur Aufnahme eines den Montagesteg 34 durchsetzenden Schraubenbolzens 46 gelagert ist.

Der Montagesteg 34 definiert in Anschlagstellung mit dem Wandelement 38 bzw. dem Türrahmen 40 die Dicke d einer Klebefuge zur Aufnahme einer Klebemasse 52.

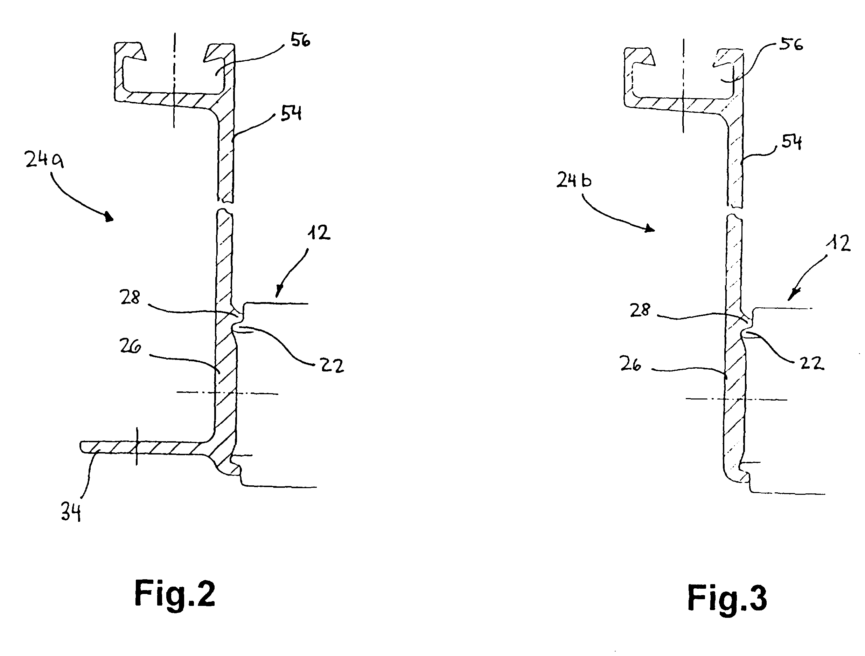

Bei einer in Fig. 2 dargestellten Variante eines Verbindungsteils 24a ragt vom Basisstreifen 26 ein zweiter Montagesteg 54 rechtwinklig zum ersten Montagesteg 34 ab und endet in einer hinterschnittenen Nut 56, die der Befestigung weiterer Komponenten dient. Hiervon unterscheidet sich die in Fig. 3 gezeigte Ausführungsform dadurch, dass der erste Montagesteg 34 fehlt.

Während der erste Montagesteg 34 bei einer Gerippestruktur für einen Wagenkasten parallel zur Seitenwand des Wagenkastens angeordnet ist, weist der zweite Montagesteg 54 rechtwinklig zur Seitenwand des Wagenkastens nach innen ab.

Zur einfachen Montage von Türrahmen 40 und Wandelementen 38 werden zunächst die Verbindungsteile 24, 24a, 24b am Profil 10 der Gerippestruktur festgelegt, anschliessend die Türrahmen 40 mit eingebauter Tür sowie die Wandelemente 38 als vollständig ausgerüstete Baugruppen an die Gerippestruktur herangeführt und von der Rückseite her mit den Montagestegen 34 verschraubt.

## Patentansprüche

1. Wagenkasten mit einer Gerippestruktur aus Profilen (10) mit an diesen längsseitig befestigten Türrahmen (40) und/oder Wandelementen (38), wobei das der Befestigung von Türrahmen und Wandelementen dienende Profil (10) einen querschnittlich C-förmigen, eine hinterschnittene Nut (20) bildenden Anschluss (12) aufweist, der von einem Verbindungsteil (24,24a,24b) übergriffen ist, wobei das Verbindungsteil über Schraubenbolzen (32) und in der Nut (20) gelagerte Nutensteine (30) mit dem Profil (10) kraftschlüssig verbunden ist,
dadurch gekennzeichnet, dass
zur Befestigung der Türrahmen (40) oder Wandelemente (32) zumindest ein Montagesteg (34, 54) mit parallel zur Längsachse des Profils (10) liegender Längsachse vom Verbindungsteil (24,24a,24b) abragt.

2. Wagenkasten nach Anspruch 1, dadurch gekennzeichnet, dass der Türrahmen ( 40 ) oder das Wandelement (38) an dem Montagesteg (34,54) zur lösbaren Befestigung über eine Schraubverbindung festgelegt ist.

3. Wagenkasten nach Anspruch 2, dadurch gekennzeichnet, dass die Schraubverbindung einen Schraubenbolzen (42, 46) umfasst, der in ein im Türrahmen (40) oder im Wandelement (38) eingelegtes Gewinde (44) eingreift.

4. Wagenkasten nach Anspruch 2, dadurch gekennzeichnet, dass die Schraubverbindung einen Schraubenbolzen (46) umfasst, der in das Gewinde eines in einer hinterschnittenen Nut (50) des Türrahmens (40) oder des Wandelementes (38) gelagerten Nutensteines (48) eingreift.

5. Wagenkasten nach Anspruch 2, dadurch gekennzeichnet, dass der Montagesteg (54) eine hinterschnittene Nut (56) zur Aufnahme eines Nutensteins für einen Schraubenbolzen umfasst.

6. Wagenkasten nach einem der Ansprüche 1 bis 5, dadurch gekennzeichnet, dass der Montagesteg (34) im wesentlichen parallel zu einer Profilwand (36) des Profils (10) angeordnet ist.

7. Wagenkasten nach einem der Ansprüche 1 bis 6, dadurch gekennzeichnet, dass sich das Verbindungsteil (24, 24a,24b) nur über einen Teilbereich des Profils (10) der Gerippestruktur erstreckt.

8. Wagenkasten nach einem der Ansprüche 1 bis 6, dadurch gekennzeichnet, dass sich das Verbindungsteil (24,24a, 24b) als Verbindungsleiste im wesentlichen über die gesamte Länge des Profils (10) der Gerippestruktur erstreckt.

9. Wagenkasten nach einem der Ansprüche 1 bis 8, dadurch gekennzeichnet, dass Türrahmen (40) und Wandelemente (38) mit der Gerippestruktur verklebt sind und der Montagesteg (34) in Anschlagstellung mit dem Türrahmen (40) bzw. dem Wandelement (38) die Dicke (d) einer Klebefuge (52) definiert.

10. Verfahren zur Herstellung eines Wagenkastens nach einem der Ansprüche 1 bis 9, dadurch gekennzeichnet, dass die Verbindungsteile (24,24a, 24b) an den Profilen (10) der Gerippestruktur vormontiert, die Türrahmen (40) bzw. Wandelemente (38) mit den Montagestegen (34,54) in Anschlag gebracht und anschliessend die Türrahmen (40) bzw. Wandelemente (38) und die Montagestege (34, 54) von der Innenseite des Wagenkastens her miteinander verschraubt werden.

## Claims

1. Vehicle body with a framework structure consisting of profiles (10) with door frames (40) and/or wall elements (38) secured thereto at the longitudinal sides, the profile (10) serving for the securing of door frames and wall elements having a connection (12) with a C-shaped cross section which forms an undercut groove (20) and is overlapped by a connecting part (24, 24a, 24b), the connecting part being non-positively connected to the profile (10) by means of bolts (32) and sliding blocks (30) supported in the groove (20), characterised in that at least one assembly web (34, 54) with a longitudinal axis situated parallel to the longitudinal axis of the profile (10) projects from the connecting part (24, 24a, 24b) in order to secure the door frames (40) or wall elements (38).

2. Vehicle body according to claim 1, characterised in that the door frame (40) or wall element (38) is fixed to the assembly web (34, 54) by means of a screw joint for the removable securing.

3. Vehicle body according to claim 2, characterised in that the screw joint includes a bolt (42, 46) which engages in a thread (44) introduced into the door frame (40) or wall element (38).

4. Vehicle body according to claim 2, characterised in that the screw joint includes a bolt (46) which engages in the thread of a sliding block (48) supported in an undercut groove (50) in the door frame (40) or wall element (38).

5. Vehicle body according to claim 2, characterised in that the assembly web (54) includes an undercut groove (56) for receiving a sliding block for a bolt.

6. Vehicle body according to one of claims 1 to 5, characterised in that the assembly web (34) is arranged substantially parallel to a profile wall (36) of the profile (10).

7. Vehicle body according to one of claims 1 to 6, characterised in that the connecting part (24, 24a, 24b) extends over only a partial region of the profile (10) of the framework structure.

8. Vehicle body according to one of clams 1 to 6, characterised in that the connecting part (24, 24a, 24b) in the form of a connecting strip extends over substantially the entire length of profile (10) of the framework structure.

9. Vehicle body according to one of claims 1 to 8, characterised in that door frames (40) and wall elements (38) are glued on to the framework structure and the assembly web (34) defines the thickness (d) of a glued joint (52) in the stop position together with the door frame (40) or wall element (38).

10. Process for the production of a vehicle body according to one of claims 1 to 9, characterised in that the connecting parts (24, 24a, 24b) are pre-assembled on the profiles (10) of the framework structure, the door frames (40) or wall elements (38) are brought to bear against the assembly webs (34, 54) and then the door frames (40) or wall elements (38) and the assembly webs (34, 54) are bolted together from the inner face of the vehicle body.

## Revendications

1. Caisse comprenant une ossature constituée de profilés (10) avec des cadres de porte (40) et/ou des éléments de paroi (38) fixés sur la longueur de ceux-ci, caisse dans laquelle le profilé (10) servant à la fixation de cadres de porte et d'éléments de paroi présente un raccord (12) en forme de C en coupe transversale formant une rainure à dépouille inverse (20) qu'enjambe un élément de liaison (24, 24a, 24b), l'élément de liaison étant relié par adhérence au profilé (10) par l'intermédiaire de boulons filetés (32) et de coulisseaux (30) montés dans la rainure (20), caractérisée en ce qu'en vue de la fixation des cadres de porte (40) ou des éléments de paroi (38), au moins une aile de montage (34, 54) à axe longitudinal parallèle à l'axe longitudinal du profilé (10) dépasse de l'élément de liaison (24, 24a, 24b).

2. Caisse selon la revendication 1, caractérisée en ce que l'encadrement de porte (40) ou l'élément de paroi (38) est fixé à l'aile de montage (34, 54) par un raccord fileté pour pouvoir être fixé avec une possibilité de démontage.

3. Caisse selon la revendication 2, caractérisée en ce que le raccord fileté comprend un boulon fileté (42, 46) qui s'engage dans un filetage (44) pratiqué dans l'encadrement de porte (40) ou dans l'élément de paroi (38).

4. Caisse selon la revendication 2, caractérisée en ce que le raccord fileté comprend un boulon fileté (46) qui s'engage dans le filetage d'un coulisseau (48) monté dans une rainure à dépouille inverse (50) du cadre de porte ou de l'élément de paroi (38).

5. Caisse selon la revendication 2, caractérisée en ce que l'aile de montage (54) comprend une rainure à dépouille inverse (56) réceptionnant un coulisseau destiné à un boulon fileté.

6. Caisse selon l'une des revendications 1 à 5, caractérisée en ce que l'aile de montage (34) est disposée quasi parallèlement à une paroi (36) du profilé (10).

7. Caisse selon l'une des revendications 1 à 6, caractérisée en ce que l'élément de liaison (24, 24a, 24b) ne s'étend que sur une zone partielle du profilé (10) de l'ossature.

8. Caisse selon l'une des revendications 1 à 6, caractérisée en ce que l'élément de liaison (24, 24a, 24b) s'étend sensiblement sur toute la longueur du profilé (10) de l'ossature, sous forme de tringle de liaison.

9. Caisse selon l'une des revendications 1 à 8, caractérisée en ce que l'encadrement de porte (40) et les éléments de paroi (38) sont collés à l'ossature et en ce que l'aile de montage (34) appliquée en position de butée avec l'encadrement de porte (40) ou l'élément de paroi (38) définit l'épaisseur (d) d'un joint de collage (52).

10. Procédé de fabrication d'une caisse selon l'une des revendications 1 à 9, caractérisé en ce que les éléments de liaison (24, 24a, 24b) sont prémontés sur les profilés (10) de l'ossature, en ce que le cadre de porte (40) respectivement les éléments de paroi (38) sont amenés en butée avec les ailes de montage (34, 54) et ensuite les cadres de porte (40) respectivement les éléments de paroi (38) et les ailes de montage (34, 54) sont vissés les uns aux autres depuis la face intérieure de la caisse.
